Europäisches Patentamt

European Patent Office

Office européen des brevets

(11) Veröffentlichungsnummer: **0 063 255**
**A1**

(12) **EUROPÄISCHE PATENTANMELDUNG**

(21) Anmeldenummer: **82102477.5**

(22) Anmeldetag: **25.03.82**

(51) Int. Cl.³: **B 65 G 51/34**

(30) Priorität: **21.04.81 CH 2591/81**

(43) Veröffentlichungstag der Anmeldung:
**27.10.82 Patentblatt 82/43**

(84) Benannte Vertragsstaaten:
**AT BE CH DE FR GB IT LI LU NL SE**

(71) Anmelder: **AUTELCA AG**
**Worbstrasse 187**
**CH-3073 Gümligen(CH)**

(72) Erfinder: **Wüthrich, Werner**
**Waldhausweg 14**
**CH-3073 Gümligen(CH)**

(74) Vertreter: **Keller, Hartmut et al,**
**Hartmut Keller Dr. René Keller Postfach 12**
**CH-3000 Bern 7(CH)**

(54) **Rohrpostanlage.**

(57) Eine Platte (14) hat einen Kranz Durchgangslöcher (13).
Von jeder Rohrpoststation (1 - 7) führt ein Fahrrohr (15 - 17)
an einer Seite der Platte (14) zu einem der Löcher (13). An der
anderen Seite der Platte (14) ist eine zur Aufnahme einer
Rohrpostbüchse ausgeführte Kammer (19) an einem um die
Lochkranzachse (21·22) drehbaren Arm (20) in Stellungen
bewegbar, in denen sie jeweils mit dem an die Platte (14)
angrenzenden Ende eines der Fahrrohre (15 - 17) fluchtet,
wobei sie dicht mit diesem verbunden ist. Das der Platte (14)
abgewandte Ende der Kammer (19) ist mit einer Arbeitsluftleitung (25) verbunden. Um eine Rohrpostbüchse von einer
ersten Rohrpoststation (z.B. 5) zu einer zweiten (z.B. 7) zu
fördern, wird die Kammer (19) in der Stellung, in der sie mit
dem Ende des Fahrrohres (15) der ersten Station (5) fluchtet,
mit Saugluft und danach in der Stellung, in der sie mit dem
Ende des Fahrrohres (17) der zweiten Station (7) fluchtet, mit
Druckluft beaufschlagt, um die Büchse aus der ersten Station
(5) in die Kammer (19) zu saugen und danach aus der
Kammer (19) in die zweite Station (7) zu drücken.

Fig.1

EP 0 063 255 A1

Rohrpostanlage
_____

Die Erfindung bezieht sich auf eine Rohrpostanlage
für Wendebetrieb, mit einer Zentrale. Bei üblichen
Rohrpostanlagen sind die Rohrpoststationen entweder
Endstationen am Ende eines Fahrrohres oder sie sind je
über eine Stationsweiche an ein Fahrrohr angeschlossen
oder als Durchlaufstationen ausgeführt. Dabei kann das
Fahrrohr ein Hauptfahrrohr oder ein über eine Gruppenweiche von einem solchen abgezweigtes Nebenstreckenfahrrohr sein. Es ist auch eine Anlage für Wendebetrieb
bekannt, die für jede Linie (Hauptfahrrohr) ein Gebläse
und eine Linienweiche hat. Bei dieser Anlage wird in
einer ersten Weichenstellung eine  Rohrpostbüchse aus
einer zum Senden bereiten Station der Linie mittels des
dieser Linie zugeordneten Gebläses bis hinter die Linienweiche gesaugt, und diese Rohrpostbüchse wird in der
zweiten Weichenstellung mittels dieses Gebläses in eine
Verteilerstelle gedrückt. In der zweiten Weichenstellung
der Linienweiche der Linie, an der die Zielstation angeschlossen ist, wird die Rohrpostbüchse mittels des
dieser Linie zugeordneten Gebläses aus der Verteilerstelle bis hinter diese Linienweiche angesaugt, und die
Büchse wird dann in der ersten Stellung dieser Linienweiche durch diese Linie zu der Zielstation gedrückt.

Durchlaufstationen, Stations-, Gruppen- und Linienweichen sind störanfällig. Bisher konnten Rohrpostanlagen mit mehr als zwei Stationen jedoch nicht ohne
Weichen ausgeführt werden.

Hier will die Erfindung Abhilfe schaffen. Die im Patentanspruch 1 angegebene, Erfindung löst die Aufgabe, eine
Rohrpostanlage zu schaffen, die nicht nur keine Durchlaufstationen, sondern auch überhaupt keine Weichen enthält und mit einem einzigen Gebläse im Wendebetrieb
arbeitet. Gegenstand der Patentansprüche 2 bis 9 sind
Weiterbildungen dieser Anlage.

Die durch die Erfindung erzielten Vorteile bestehen im
wesentlichen darin, dass die Anlage keine störanfälligen Teile, insbesondere keine Weichen enthält und für
alle Linien nur ein Gebläse benötigt wird, wobei die
Arbeitsluftleitung dauernd an die Kammer angeschlossen
ist.

Als Ausführungs- und Verwendungsbeispiel der Erfindung
wird im folgenden anhand der beiliegenden Zeichnungen
eine Rohrpostanlage für ein Geldinstitut beschrieben.
Es zeigen:

Fig. 1   eine schematische Darstellung der Rohrpostanlage, teils im Schnitt,

Fig. 2   eine Draufsicht nach der Linie II-II in Fig.
         1, wobei nicht alle Fahrrohre dargestellt sind,

Fig. 3   einen Achsenlängsschnitt durch eine Rohrpostbüchse und

Fig. 4 einen Achsenquerschnitt nach der Linie IV-IV

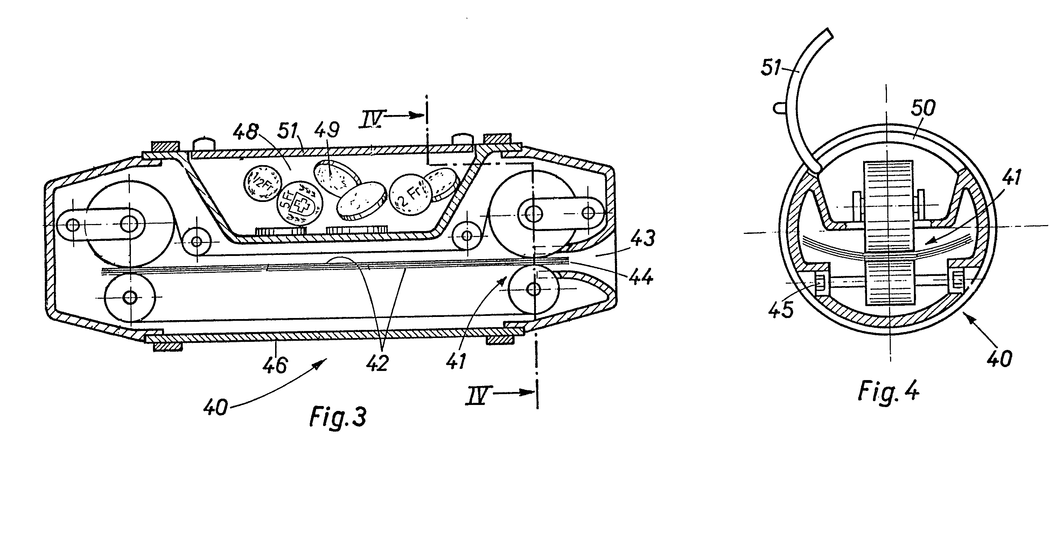

in Fig. 3.

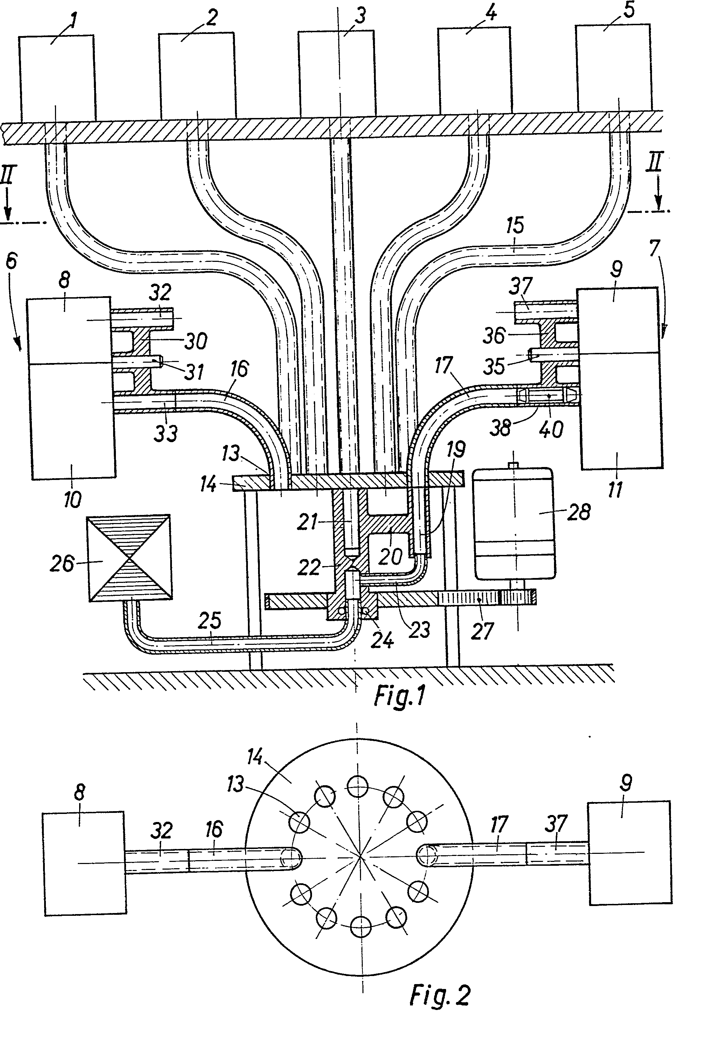

Die dargestellte Anlage hat zwölf Stationen. Davon befinden sich zehn im Schalterraum des Geldinstituts, je
eine an jedem Schalter , an dem Geld entgegengenommen
und ausgezahlt wird. Von diesen zehn Stationen sind in
Fig. 1 nur fünf dargestellt und mit 1 bis 5 bezeichnet.
Zwei Stationen 6 und 7 befinden sich im Tresorraum und
sind je mit einem Geldannahmeautomaten 8 bzw. 9 und
einem Geldausgabeautomaten 10 bzw. 11 ausgerüstet, die
von einer (nicht dargestellten) an den Schaltern bedienbaren Datenverarbeitungsanlage gesteuert werden, um
eine mit Geld beladene, empfangene Rohrpostbüchse zu
leeren und das Geld zu zählen und sortiert abzulegen,
bzw. eine leere Rohrpostbüchse mit Geld zu beladen.

Von jeder der zwölf Stationen führt ein Fahrrohr ohne
Unterbrechung direkt, d.h. nicht durch eine Durchlaufstation und nicht über eine Weiche, zu einem Durchgangsloch 13 einer Platte 14. In der Zeichnung sind das Fahrrohr der Station 5 mit 15 und die Fahrrohre der Stationen 6 und 7 mit 16 und 17 bezeichnet. An der den Fahrrohren gegenüberliegenden Seite der Platte 14 ist eine
für die Aufnahme einer Rohrpostbüchse bemessene Kammer
19 derart vor jedes der Löcher 13 bewegbar, dass sie
mit dem Ende des Fahrrohres fluchtet, (bei einem gekrümmten Rohrende mit der Tangente der Rohrmittellinie am Ende der Krümmung fluchtet). Zu diesem Zwecke
bilden die Löcher 13 einen Lochkranz, und die Kammer 19
ist an einem Dreharm 20 befestigt, der mit einer auf
einem zum Lochkranz 13 zentrischen Lagerzapfen 21 drehbaren Welle 22 fest verbunden ist. Das der Platte 14
abgewandte Ende der Kammer 19 ist über ein Verbindungsrohr 23 und eine am einen Ende der Welle 22 angeordnete Stopfbüchse 24 mit einer Arbeitsluftleitung 25 verbunden, die von einem Gebläse 26 abwechselnd mit Saugluft oder Druckluft gespeist wird. Zum Antrieb der Welle 22 dient ein Zahnriementrieb 27 und ein Getriebemotor 28, der von der Datenverarbeitungsanlage steuerbar ist, um die Kammer 19 jeweils in eine Stellung zu drehen, in der ihr Hohlraum mit einem wählbaren der Fahrrohre fluchtet, um die Rohrpostbüchse aus diesem Fahrrohr anzusaugen oder in dieses zu drücken. Dabei sorgt eine mit einem an der Platte 14 anliegenden Kragen versehene (nicht dargestellte) Dichtung am in Fig. 1 oberen Ende der Kammer 19 für den erforderlichen Abschluss gegenüber der Aussenluft.

In der Station 6 ist ein zweiarmiger Hebel 30 von einer (nicht dargestellten) Antriebsvorrichtung um eine horizontale Achse 31 in 180°-Schritten drehbar. Am freien Ende jedes Armes ist eine Aufnahme 32 bzw. 33 für eine Rohrpostbüchse 40 befestigt, deren Längsachse parallel zur Drehachse 31 des Hebels 30 und zum Ende des Fahrrohres 16 verläuft. In jeder der durch 180°-Drehungen aufeinanderfolgenden Stellungen des Hebels 30 ist eine der Aufnahmen 32 und 33 vor dem Geldannahmeautomaten 8 und die andere 33 vor dem Geldausgabeautomaten 10, wobei sie mit dem Ende des Fahrrohres 16 fluchtet. Die Station 7 ist entsprechend mit einem um eine Achse 35 drehbaren, zweiarmigen Hebel 36 mit zwei Aufnahmen 37 und 38 ausgerüstet.

Für die beschriebene Ausrüstung der Stationen 6 und 7 eignen sich insbesondere nach Fig. 3 und 4 ausgeführte Rohrpostbüchsen 40. Diese enthalten einen Bandförderer 41 mit zwei Förderbändern, deren Arbeitstrume 42 dicht aneinander verlaufen, so dass der Büchse 40 stirnseitig
durch einen nach aussen trichterförmig erweiterten
Schlitz 43 zugeführtes Papiergeld (einen Geldschein
oder zu einem Bündel geschichtete Scheine) zwischen den
Trumen 42 in die Büchse 40 gezogen, bei stillstehendem
Bandförderer 41 in der Büchse 40 festgehalten (wie das
Papiergeld 44 in Fig. 3) und durch Antrieb des Bandförderers 41 wieder durch den Schlitz 43 aus der Büchse
40 ausgestossen werden kann. Die Welle einer der Umlenktrommeln des Bandförderers 41 ist mit einem Kupplungsglied 45 einer Wellenkupplung ausgerüstet, das in
einer Vertiefung des Büchsenmantels 46 angeordnet ist.
Zur Verwendung dieser Büchsen 40 hat jede Rohrpoststation
eine (nicht dargestellte) Antriebsvorrichtung mit einem
Kupplungsglied, das mit dem Kupplungsglied 45 des Bandförderers 41 gekuppelt wird. um den Bandförderer 41 einer
in der Station befindlichen Büchse zum Beladen oder Entladen von Papiergeld anzutreiben. Die Antriebsvorrichtung
ist von einer Lichtschranke gesteuert, deren Lichtstrahl
in der Station vor dem Schlitz 43 der Büchse verläuft.
Der Büchse stirnseitig zugeführtes Papiergeld durchbricht
den Lichtstrahl und setzt den Bandförderer in Gang. Der
Antrieb läuft dann, solange der Lichtstrahl unterbrochen
ist und danach noch entsprechend einer Förderstrecke,
die gleich dem Abstand des Lichtstrahles vom Spalt des
dem trichterförmigen Schlitz 43 zugewandten Umlenkwalzenpaares des Bandförderes 40 ist. Beim Ausstossen von
Papiergeld hält der Antrieb an, wenn das Papiergeld
den Lichtstrahl nicht mehr unterbricht.

Die Büchse 40 hat eine Kammer 48 für Hartgeld 49 mit
einer Oeffnung 50, die durch einen Klappdeckel 51 geschlossen ist,der in Schliesslage durch eine (nicht
dargestellte) Arretiervorrichtung gehalten ist und in dieser Lage einen Teil des Büchsenmantels 46 bildet.
Jede Station ist mit einer (nicht dargestellten) Vorrichtung zum Lösen der Arretiervorrichtung ausgerüstet. An
jeder der Rohrpoststationen - bei den Stationen 6 und  7
an jeder Rohrpostbüchsenaufnahme 32 und 33 bzw. 37 und
38 - ist eine nicht dargestellte Haltevorrichtung für
eine Rohrpostbüchse vorgesehen.  Die Haltevorrichtung
hat einen (nicht dargestellten) Drehantrieb, der die
Büchse 40 zum Beladen mit Geld in eine Stellung, in
der die Oeffnung 50 oben ist, und zum Entladen von Geld
in einer Stellung, in der die Oeffnung 50 unten ist,
um die Büchsenlängsachse dreht. Der Drehantrieb ist von
einer Abtastvorrichtung gesteuert, die eine am Büchsenumfang vorgesehene Markierung abtastet. In den Büchsenaufnahmen 32, 33, 37 und 38 wird die Büchse von dem
Drehantrieb in die Stellung gedreht, in der die Oeffnung 50 der Achse 31  bzw. 35 des Hebels 30 bzw. 36 zugewandt ist. Dann befindet sich in jeder Stellung des
Hebels 31 bzw. 35 die Oeffnung 50 einer Büchse, die
vor dem Geldannahmeautomaten 8 bzw. 9 ist, oben, und
die Oeffnung 50 einer Büchse, die vor dem Geldausgabeautomaten 10 bzw. 11 ist, unten. Jeder der Stationen an
den Schaltern, z.B. 1 bis 5, ist eine Büchse zugeordnet, die an der Station bleibt, wenn sie auszuzahlendes Geld vom Tresorraum (Stationen  6 und 7) zum Schalter befördert hat, und vom  Schalter zur Station zurückkehrt, wenn sie eingezahltes Geld vom Schalter in  den
Tresorraum gefördert hat.

Der Schalterbeamte, z.B. an der Station 5, zählt von
einem Kunden eingezahltes Geld und gibt dessen Betrag
an die Datenverarbeitungsanlage, zusammen mit den zugehörigen Buchungsdaten und der Schalter-Nummer, der ein dem Beamten individuelles Kennzeichen hinzugefügt
werden kann. Die Station kann, wenn der Schalter nicht
bedient ist, blockiert sein und nur mittels eines Schlüssels oder einer Kennkarte, die das Kennzeichen enthält,
in Betrieb gesetzt werden, wobei das Kennzeichen dann
bei jedem Zahlungsvorgang automatisch mit an die Datenverarbeitungsanlage übertragen wird. Der Beamte füllt
Hartgeld mittels eines an der Station vorgesehenen
Trichters in die Kammer 48 der Büchse 40 und führt
Papiergeld, mehrere Geldscheine zu einem Bündel übereinander gestapelt, dem trichterförmigen Schlitz 43 der
Büchse 40 zu, woraufhin die Lichtschranke anspricht und
das Papiergeld vom Bandförderer 41, wie beschrieben,
in die Büchse 40 gezogen wird. Das Geld könnte auch automatisch gezählt und in die Büchse gegeben werden, indem
die Rohrpoststationen an den Schaltern ähnlich den
Stationen 6 und 7 ausgeführt sind. Wenn die Büchse 40
beladen ist, wird ihr Deckel 51 von Hand bzw. automatisch zugeklappt, wobei die Deckelarretierung einrastet. Daraufhin veranlasst die Datenverarbeitungsanlage eine Drehung des Armes 20 in die Stellung, in der
die Kammer 19 mit dem Fahrrohr 15 verbunden ist, und die
Zufuhr von Saugluft zur Kammer 19, um die Büchse 40 von
der Station 5 in die Kammer 19 zu saugen. Danach veranlasst die Datenverarbeitungsanlage eine Drehung des
Armes 20 in eine Stellung, in der die Kammer 19, welche
nun die von der Station 5 gekommene Büchse 40 enthält,
mit dem Fahrrohr einer der Stationen 6 und 7 fluchtet,
die zur Geldannahme bereit ist, z.B. mit dem Fahrrohr
16 der Station 6. Erforderlichenfalls setzt der Steuerungsvorgang erst dann ein, wenn eine der Stationen 6
und 7 einen Arbeitszyklus beendet hat. Nach dieser
Drehung des Armes 20 löst die Datenverarbeitungsanlage
die Zufuhr von Druckluft zur Arbeitsluftleitung 25 aus.

woraufhin die Büchse aus der Kammer 19 in die Aufnahme
33 der Station 6 gedrückt wird. Da Geld entgegengenommen werden soll, steuert die Datenverarbeitungsanlage den
zweiarmigen Hebel 30 für eine 180°-Drehung, wodurch
die Aufnahme 33 vor den Geldannahmeautomaten 8 kommt.
Nun wird die Arretierung des Deckels 51 gelöst und
der Bandförderer 41, wie erwähnt, angetrieben. Da die
Oeffnung 50 der Büchse 40 unten ist, klappt der Deckel
51 auf, das Hartgeld 49 fällt in eine Schale, aus der
es über eine Rutsche (nicht dargestellt) zum Geldannahmeautomaten 8 rutscht, während dieser gleichzeitig das
vom Bandförderer 41 aus der Büchse ausgestossene Papiergeld 44 aufnimmt. Der Automat 8 zählt das angenommene
Geld, dessen Betrag er an die Datenverarbeitungsanlage
zur Kontrolle der Uebereinstimmung mit dem vom Schalter
(Station 5) gemeldeten Betrag überträgt. Bei Richtigbefund des Betrages wird das Geld in Geldbehälter abgelegt. Die Automaten 8 und 10 haben zweckmässig gemeinsame Geldbehälter, so dass vom Geldannahmeautomaten 8
angenommenes Geld vom Geldausgabeautomaten 10 wieder
ausgegeben werden kann. Die leere Büchse wird in der entsprechenden Stellung des Armes 20 in die Kammer 19 gesaugt, und dann in einer Stellung des Armes 20, in der
die Kammer 19 mit dem Fahrrohr 15 fluchtet, in die
Station 5 gedrückt.

Wenn Geld an einen Kunden ausgezahlt werden soll, gibt
der Schalterbeamte den Betrag einschl. Stückelung, Buchungsdaten, Schalter-Nummer und gegebenenfalls individuellem Kennzeichen des Beamten an die Datenverarbeitungsanlage. Diese steuert den Getriebemotor 28 und die
Arbeitsluftzufuhr zur Leitung 25, um die in der Rohrpoststation am Schalter, z.B. der Station 5, befindliche leere Rohrpostbüchse durch das Fahrrohr 15 in die Kammer 19 zu saugen und aus dieser in das Fahrrohr
16 bzw. 17 zu einer der beiden Stationen 6 und 7, nämlich einer zur Aufnahme einer Büchse bereiten Station
zu fördern. Erforderlichenfalls setzt der Steuerungsvorgang erst dann ein, wenn eine dieser Stationen 6 und
7 einen Arbeitszyklus beendet hat, so dass sie wieder
zur Aufnahme einer Büchse bereit ist. Wenn beispielsweise die Station 7 zur Aufnahme einer Büchse bereit
ist, und deren Hebel 36 die dargestellte Stellung hat,
gelangt die Büchse in die Aufnahme 38, die bereits vor
dem Geldausgabeautomaten 11 ist. Die Büchse wird mit
Geld des von der Datenverarbeitungsanlage dem Automaten
11 angegebenen Betrages automatisch beladen, und die
Büchse wird durch das Fahrrohr 17 in die Kammer 19 gesaugt und aus dieser durch das Fahrrohr 15 in die Station 5 gedrückt. Dazu wird die Arbeitsluft entsprechend
gesteuert. In der Station 5 wird das Papiergeld durch
Antrieb des Bandförderers 41 ausgestossen und das Hartgeld fällt durch den nach Lösen seiner Arretierung nach
unten in Offenstellung klappenden Deckel 51 in eine
Hartgeldschale. Der Schalterbeamte kontrolliert den Betrag und zahlt ihn aus.

Zusätzlich zu der einen Kammer 19 kann eine (grundsätzlich auch mehr als eine) weitere, solche Kammer
vorgesehen sein, die ebenso wie die Kammer 19, aber
unabhängig von dieser, an der Platte 14 auf dem Lochkranz 13 bewegbar und abwechselnd mit Saugluft und
Druckluft beaufschlagbar ist. Dadurch können gleichzeitig oder wenigstens teilweise gleichzeitig mit
Hilfe der Kammer 19 eine Rohrpostbüchse zwischen
zwei Stationen und mit Hilfe der weiteren Kammer
eine zweite Rohrpostbüchse zwischen zwei anderen
Stationen gefördert werden. Dabei hat die die Anlage steuernde Datenverarbeitungsanlage jede der
beiden Kammern einem der Förderwege zuzuordnen, die
Druck- und Saugluftbeaufschlagung entsprechend zu
steuern sowie die Bewegungen der beiden Kammern so
zu koordinieren, dass die eine der anderen nicht im
Wege steht.

HK/eb-6709-6712
21.4.81/18.3.82

Patentansprüche

1. Rohrpostanlage für Wendebetrieb. mit einer Zentrale. dadurch gekennzeichnet, dass jede Rohrpoststation (1 - 7) durch ein ihr einzeln zugeordnetes, ununterbrochenes Fahrrohr (15 - 17) mit der Zentrale verbunden ist. und dass in der Zentrale ein Ende einer Kammer (19) für die Aufnahme jeweils einer Rohrpostbüchse mit einem wählbaren der Fahrrohre (15 - 17) unmittelbar derart verbindbar ist, dass das Fahrrohrende mit der Kammer (19) fluchtet, und dass das andere Ende der Kammer(19) mit einer abwechselnd Saugluft und Druckluft liefernden Arbeitsluftleitung (25) in Verbindung steht.

2. Anlage nach Anspruch 1. dadurch gekennzeichnet, dass eine von wenigstens einem Teil der Stationen bedienbare Steuervorrichtung die Verbindung der Kammer mit dem Fahrrohr einer zum Senden bereiten Station sowie die Lieferung von Saugluft zum Saugen der zu sendenden Rohrpostbüchse von der Station in die Kammer und danach die Verbindung der Kammer mit dem Fahrrohr der zum Empfang der Rohrpostbüchse bestimmten Station sowie die Lieferung von Druckluft steuert. um die Rohrpostbüchse aus der Kammer zu dieser Station zu drücken.

3. Anlage nach Anspruch 1 oder 2, dadurch gekennzeichnet, dass die Fahrrohre (15 - 17) in der Zentrale an einer Seite einer Platte (14) an Durchgangslöcher (13) anschliessen, und die Kammer (19) in Stellungen bewegbar ist, in denen das eine Ende ihres Hohlraumes an der anderen Seite der Wand (14) an eines der Löcher (13) luftdicht anschliesst.

4. Anlage nach Anspruch 3, dadurch gekennzeichnet, dass die Löcher (13) einen Lochkranz bilden. und die Kammer (19) am Ende eines um die Lochkranzachse (21/22) drehbaren, von einer steuerbaren Antriebsvorrichtung (27,28) antreibbaren Armes (20) getragen ist.

5. Anlage nach Anspruch 4, dadurch gekennzeichnet, dass der Arm (20) an einer Welle (22) befestigt ist. an deren einem Ende die mit der Kammer (19) verbundene Arbeitsluftleitung (25) angeschlossen ist.

6. Anlage nach einem der Ansprüche 1 bis 5, dadurch gekennzeichnet, dass zum Rohrpost-Geldtransport in einem Geldinstitut zwischen Rohrpoststationen (1 - 5) an den Schaltern, an denen die Kunden bedient werden, und wenigstens einer Rohrpoststation (6, 7) in einem vom Schalterraum getrennten Tresorraum, wenigstens eine Rohrpoststation (6.7) im Tresorraum mit einem von den Stationen (1 - 5) an den Schaltern bedienbaren Geldannahme- (8, 9) und/oder Geldausgabeautomaten (10, 11) und mit einer Vorrichtung zur Entnahme von Geld aus einer empfangenen Rohrpostbüchse und Uebergabe an den Geldannahmeautomaten (8, 9) bzw. zur Entgegennahme von Geld vom Geldausgabeautomaten (10. 11) und Uebergabe in eine zu sendende Rohrpostbüchse ausgerüstet ist.

7. Anlage nach Anspruch 6, dadurch gekennzeichnet. dass wenigstens eine mit einem Geldannahmeautomaten (8, 9) und einem Geldausgabeautomaten (10. 11) ausgerüstete Rohrpoststation (6, 7) im Tresorraum zwei je für eine Rohrpostbüchse bemessene Rohrpostbüchsen-Aufnahmen (32, 33 bzw. 37, 38) hat, die an den Enden eines zweiarmigen Hebels (30, 36) getragen sind, der mittels einer steuerbaren Antriebsvorrichtung in zwei um 180°
versetzte Stellungen drehbar ist, in denen jeweils eine
Aufnahme (32, 37) vor dem Geldannahmeautomaten (8, 9)
und die andere (33, 38) vor dem Geldausgabeautomaten
(10, 11) gehalten ist, in jeder dieser Stellungen jeweils eine der beiden Aufnahmen (32, 33 bzw. 37, 38)
mit dem Ende des zu der Station (6, 7) führenden Fahrrohrs (16, 17) fluchtet.

8. Anlage nach einem der Ansprüche 1 bis 7, dadurch
gekennzeichnet, dass in jeder Rohrpoststation eine Vorrichtung vorgesehen ist, die eine Rohrpostbüchse (40)
um ihre Längsachse wahlweise in eine Stellung, in der
eine am Büchsenmantel (46) befindliche, mit einem Deckel
(51) versehene Oeffnung (50) einer Kammer (48) für
Hartgeld zur Geldzufuhr oben ist, oder in eine Stellung,
in der die Oeffnung (50) zur Geldentnahme unten ist,
dreht, und dass in jeder dieser beiden Stellungen eine
Arretierung für den Deckel gelöst ist, und eine an der
Station vorgesehene Antriebsvorrichtung mit einem in
der Rohrpostbüchse (40) enthaltenen Bandförderer (41)
mit zwei Förderbändern gekuppelt ist, zwischen dessen
dicht aneinander verlaufenden Arbeitstrumen (42) Papiergeld oder anderes Schriftgut in die Büchse (40) gezogen,
darin festgehalten und aus der Büchse (40) ausgestossen werden kann.

9. Anlage nach Anspruch 7 und 8, dadurch gekennzeichnet, dass jede der beiden Büchsenaufnahmen (32, 33 bzw.
37, 38) mit einer Vorrichtung ausgerüstet ist, die eine
aufgenommene Büchse um ihre Längsachse in eine Stellung
in bezug auf den zweiarmigen Hebel (30, 36) dreht, in
der eine am Büchsenmantel (46) befindliche, mit einem Deckel (51) versehene Oeffnung (50) einer Hartgeldkammer (48) in der Hebelstellung, in der die Büchse
(40) vor dem Geldannahmeautomaten (8, 9) steht, unten,
und in der Hebelstellung, in der die Büchse vor dem
Geldausgabeautomaten (10, 11) steht, oben ist, und dass
in den beiden Hebelstellungen die Arretierung für den
Deckel (51) gelöst ist, und der Papiergeldannahmeschlitz
des Geldannahmeautomaten (8, 9) bzw. der Papiergeldausgabeschlitz des Geldausgabeautomaten (10, 11) mit einem
Schlitz (43) an der dem Automaten (8, 9, 10, 11) zugewandten Stirnseite der Büchse (40) fluchtet, an den
der Bandförderer (41) in derBüchse (40) anschliesst,
der in diesen Hebelstellungen mit einer am Geldannahmeautomaten (8, 9) bzw. Geldausgabeautomaten (10, 11) angeordneten Antriebsvorrichtung gekuppelt ist, um Papiergeld (44) zwischen den Arbeitstrumen (42) des Bandförderers (41) in die Büchse (40) zu ziehen bzw. aus dieser
herauszustossen.

HK/eb-6538
21.4.81

Fig.1

Fig.2

Fig.3

Fig.4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 259 792 (F. BUCHWALD) <br><br> * Seite 3, Zeile 26 - Spalte 4, Zeile 1; Ansprüche 1,2; Figuren * | 1,2,4, 5 | B 65 G 51/34 |
| X | DE-C- 691 224 (J. REINECK) <br> * Seite 2, Zeilen 7-16, 54-74 * | 1-5 | |
| A | FR-A-1 321 825 (UNITED KINGDOM ATOMIC ENERGY AUTHORITY) <br> * Zusammenfassung * | 8 | |
| A | FR-A-1 372 206 (INT. STANDARD ELECTRIC CORP.) | | |
| A | DE-B-2 515 717 (SCHNEIDER) <br><br> ----- | | |

| | RECHERCHIERTE SACHGEBIETE (Int. Cl. ³) |
|---|---|
| | B 65 G 51 |

Der vorliegende Recherchenbericht wurde für alle Patentansprüche erstellt.

| Recherchenort <br> DEN HAAG | Abschlußdatum der Recherche <br> 21-07-1982 | Prüfer <br> VAN ROLLEGHEM F.M. |
|---|---|---|